# EUROPEAN PATENT SPECIFICATION

(11) **EP 3 422 472 B1**
(45) Date of publication and mention of the grant of the patent: **20.07.2022**
(21) Application number: 18180990.6
(22) Date of filing: 29.06.2018
(51) Int. Cl.: H01Q 1/24, H01Q 13/10

(54) **METAL FRAME BODY AND TERMINAL INCLUDING SAME, AND MOBILE TERMINAL**
METALLRAHMENKÖRPER UND ENDGERÄT DAMIT SOWIE MOBILES ENDGERÄT
CORPS DE BÂTI MÉTALLIQUE ET TERMINAL COMPRENANT CELUI-CI ET TERMINAL MOBILE

(30) Priority: 30.06.2017 CN 201710527568
(43) Date of publication of application: 02.01.2019
(73) Proprietor: Beijing Xiaomi Mobile Software Co., Ltd., Beijing 100085 (CN)
(72) Inventor: KUANG, Wei, Haidian District, Beijing 100085 (CN); SU, Yu Chuan, Haidian District, Beijing 100085 (CN)
(74) Representative: Jeffrey, Philip Michael

(56) References cited:
- WO-A1-2015/035854
- US-A1- 2014 266 922
- US-A1- 2017 077 603
- Ieee Antennas And Propagation Society: "IEEE Standard for Definitions of Terms for Antennas", IEEE Standard, 6 March 2014 (2014-03-06), XP055688902, Piscataway, NJ, USA DOI: 10.1109/IEEESTD.2014.6758443 ISBN: 978-0-7381-8927-7 Retrieved from the Internet: URL:https://ieeexplore.ieee.org/document/6 758443 [retrieved on 2020-04-23]

## Description

### TECHNICAL FIELD

The present invention relates to an electronic device, and more particularly, to a metal frame body and a terminal including the metal frame body, and a mobile terminal.

### BACKGROUND

Currently, the terminal with a positioning function such as a mobile phone is becoming more and more popular. The terminal implements this function by a global positioning system (GPS) antenna. Therefore, the energy efficiency of the GPS antenna is very important for positioning.

US2014/266922 discloses an electronic device antenna comprising a resonating element arm and a slot-based parasitic antenna resonating element.

US2017/077603 discloses a device comprising two antenna feeds, each coupled to a slot in a printed wiring board and the slots being coupled to a conductive portion of a cover of the device.

WO 2015/035854 discloses a metal frame antenna and terminal.

### SUMMARY

The embodiments of the present invention provide a metal frame body defined in claims 1 and 2, a terminal defined in claim 3, and a mobile terminal defined in claims 4-7. According to the embodiments of the present invention, energy efficiency of the positioning antenna is significantly improved, thereby prolonging battery life of the mobile terminals.

According to a first aspect of the embodiments of the present invention, a metal frame body is provided as claimed in claim 1.

The technical solution provided by the embodiments of the present invention may have the following advantageous effect: a slot is provided on the middle frame to increase the upper hemisphere efficiency and proportion of the GPS antenna and thereby to improve the GPS positioning performance.

The slot is such formed that it has a first point on a first side of the middle frame, the slot is perpendicular to the first side, and the first side is one side adjacent to the gap, among four sides the middle frame.

The technical solution provided by the embodiment of the present invention may have the following advantageous effect: the upper hemisphere efficiency and proportion of the GPS antenna are better increased.

The technical solution provided by the embodiment of the present invention may have the following advantageous effect: the slot is provided on a position capable of improving the GPS positioning performance.

The slot has a length of m times a signal wavelength of the GPS antenna, m being a numerical value between 1/8 and 1/2.

The technical solution provided by the embodiment of the present invention may have the following advantageous effect: an optimal length is provided to further improve the GPS positioning performance.

In one embodiment, the top frame and the middle frame are disposed on a same plane and the top frame is disposed above the middle frame to facilitate the GPS antenna transmitting or receiving signals.

The technical solution provided by the embodiment of the present invention may have the following advantageous effect: the reliability of the GPS positioning is enhanced.

In one embodiment, the GPS antenna is disposed on an upper portion of the top frame.

The technical solution provided by the embodiment of the present invention may have the following advantageous effect: the reliability of the GPS positioning is further enhanced.

In one embodiment, the metal frame body is made of at least one of aluminum alloy, aluminum, or anodized aluminum.

The technical solution provided by the embodiment of the present invention may have the following advantageous effect: the structure of the metal frame body is introduced.

The present invention also provides a terminal comprising:
a metal frame body as claimed in claim 1.

The present invention also provides a mobile terminal comprising a metal frame body as claimed in claim 1.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating a structure of a metal frame body according to an exemplary embodiment.
Fig. 2 is a schematic diagram illustrating a structure of a middle frame body according to an exemplary embodiment.
Fig. 3 is a schematic diagram illustrating a structure of a metal frame body according to an exemplary embodiment.
Fig. 4 is a schematic diagram illustrating a structure of a terminal according to an exemplary embodiment.
Fig. 5-1 is a graph showing a position of a terminal under the condition of a metal frame body according to the prior art.
Fig. 5-2 is a graph showing a simulation result of circular polarization of a GPS antenna under the condition of a metal frame body according to the prior art.
Fig. 5-3 is a graph showing a simulation result of circular polarization of a GPS antenna with a phase difference of 90 degree under the condition of a metal frame body according to the prior art.
Fig. 6-1 is a graph showing a position of a terminal under the condition of a metal frame body according to the present embodiment.
Fig. 6-2 is a graph showing a simulation result of circular polarization of a GPS antenna under the condition of a metal frame body according to the present embodiment.
Fig. 6-3 is a graph showing a simulation result of circular polarization of a GPS antenna with a phase difference of 90 degree under the condition of a metal frame body according to the present embodiment.

### DETAILED DESCRIPTION

Various embodiments of the present invention are described below with specific examples, and other advantages and effects of the present invention can be easily understood by those skilled in the field of technology from the contents disclosed in this specification The following description refers to the accompanying drawings in which the same numbers in different drawings represent the same or similar elements unless otherwise indicated. Apparently, the described embodiments are only a part of embodiments in the present invention, rather than all of them. The present invention can also be implemented or applied through different specific embodiments, and various details of the specification can also be modified or changed based on different viewpoints and applications without departing from the the present invention.

Various navigation systems allow terminal devices such as mobile phones to accurately determine their locations. Satellite-based navigation systems such as the Global Positioning System (GPS), the GLONASS, The Galileo positioning system, and the BeiDou Navigation Satellite System are widely adopted by mobile terminal devices for positioning.

In the prior art, GPS satellites are all in the direction of the zenith, so that the higher the upper hemisphere efficiency and the upper hemisphere proportion (the ratio of the upper hemisphere efficiency to the total efficiency) of the GPS antenna for a smart mobile phone are, the more advantageous to the positioning of the GPS.

However, due to being currently restricted by the space of mobile phone and by stacking of devices, it is difficult to control the upper hemisphere of the GPS antenna for mobile phone. The upper hemisphere efficiency may be lower because of low upper hemisphere proportion, even when the total efficiency is higher.

Meanwhile, an improvement in upper hemisphere of the GPS antenna involves a change in field pattern of the antenna, which is generally relatively difficult on the mobile phone, particularly the mobile phone with a metal frame body, because the metal frame body can shield the GPS signals or at least distort the electromagnetic field patterns around the GPS antenna.

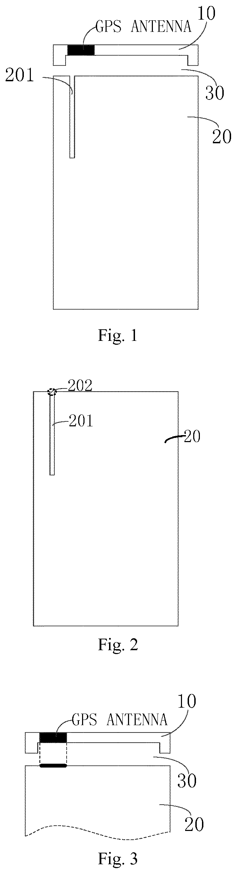

Fig. 1 is a block diagram illustrating a metal frame body according to an exemplary embodiment. The metal frame body can be part of a terminal, such as a mobile phone, a tablet computer, or a portable positioning device.

As shown in Fig. 1, the metal frame body includes: a top frame 10 provided with a global positioning system (GPS) antenna. The metal frame body can be part of a terminal, such as a mobile phone, a tablet computer, or a portable positioning device.

Herein, the GPS is a terminal for performing positioning or navigating by receiving satellite signals. For receiving satellite signals, an antenna must be used. GPS satellite signals are classified into signal L1 and signal L2 whose frequencies are 1,575.42 MHZ and 1,228 MHZ, respectively.

Signal L1 is an open civil signal in the form of circular polarization. The signal whose signal strength is around -166DBM is a weaker signal. From these features, it is determined that a special antenna has to be prepared for receiving GPS signals. The GPS antenna of the present embodiment not only may receive GPS signals, but also may be compatible with other positioning systems, for example, Beidou system.

A middle frame 20 is provided with a slot 201, the slot 201 corresponding to the GPS antenna in position.

In the present embodiment, the slot 201 changes the ground current distribution on the middle frame 20. The middle frame is configured to anchor electronic components and physical press-keys of the mobile terminal.

The middle frame 20 includes four side frames, and a frame parallel to a display screen (not shown) of the mobile terminal and configured to anchor electronic components of the mobile terminal. The position of the GPS antenna is exactly a position on the top frame at which the GPS antenna is provided after the terminal is assembled

The top frame 10 and the middle frame 20 are electrically isolated from each other by a gap 30. In some embodiments, the gap 30 can be an air gap. In some other embodiments, the gap 30 can be filled with a medium such as an insulating material, e.g., plastic, rubber, resin, etc.

The gap 30 is a gap between the top frame 10 and the middle frame 20, such that the GPS antenna will not be directly affected by the electronic components on the middle frame 20

The slot in Fig. 1 may also be provided on a side frame, and is specifically provided depending on the position of the GPS antenna. Fig. 1 is a plan view showing the entire metal frame body, which includes side frames, being stretched

In the present embodiment, the slot is provided on the middle frame to increase the upper hemisphere efficiency and proportion of the GPS antenna and thereby to improve the GPS positioning performance.

As shown in Fig. 2, the slot 201 is such formed that it starts from a first point 202 on a first side. The slot is perpendicular to the first side, and the first side is one side, adjoining the gap 30, of four sides the middle frame 20 has.

As shown in Fig. 3, the footprint of the first point 202 on the first side is a footprint of a projection of the GPS antenna on the first side. The solid line in black and bold denotes the footprint of the first point 202 on the first side.

Here, two end points of the footprint of the first point 202 on the first side are two points, to which two end points of the GPS antenna are vertically projected, on the first side, respectively. The two end points of the GPS antenna are two boundary points of the GPS antenna along the direction of the first side.

The slot 201 is m times as long as the wavelength of a signal of the GPS antenna, m being a numerical value between 1/8 and 1/2.

Generally, the slot 201 is 1/4 times as long as the wavelength of the signal of the GPS antenna, the wavelength being related to the media surrounding the slot.

The frequency of the signal of the GPS antenna is in a certain range, and also the corresponding wavelength is in a certain range. Then, the length of the slot 201 also is in a certain range.

In one embodiment, the top frame 10 and the middle frame 20 are provided on the same plane and the top frame 10 is provided above the middle frame 20, so that the GPS antenna transmits or receives signals.

GPS satellites are all in the direction of the zenith, so that the GPS antenna needs to be provided on top of the entire terminal. Herein, the top refers to the top position when a user reads from top to bottom.

In one embodiment, the GPS antenna is provided on the upper portion of the top frame 10.

The GPS antenna must be provided above all the electronic components. Because the top frame 10 is provided above the middle frame 20, the GPS antenna is ensured to be provided on top of all the electronic components if the GPS antenna is provided on the upper portion of the top frame 10.

In one embodiment, the material of the metal frame body is aluminum alloy, aluminum, or anodised aluminum.

### Second Embodiment

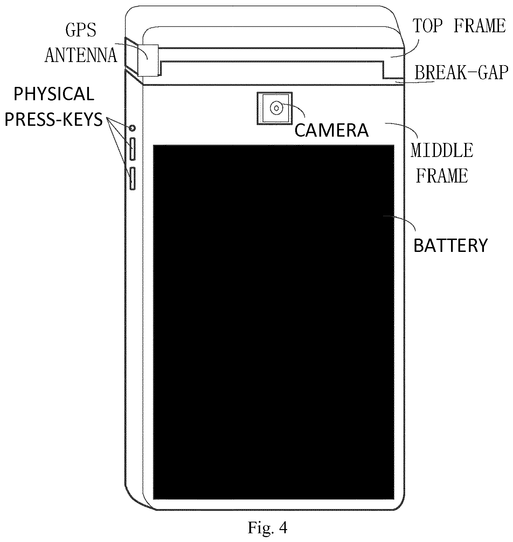

The present embodiment provides a terminal, and as shown in Fig. 4, the terminal includes:
a metal frame body described in the first embodiment; and
a GPS antenna.

Herein, the metal frame body includes: a top frame provided with a global positioning system (GPS) antenna; a middle frame provided with a slot, the slot corresponding to the GPS antenna in position. The top frame and the middle frame are electrically isolated from each other by a gap.

In some embodiments, the top frame and the middle frame are removably coupled together through a mechanical structure such as one or more protrusions and indentations. The top frame and the middle frame can therefore be coupled together, or decoupled to give access to some components of the mobile terminal 40.

In some other embodiments, the top frame and the middle frame are fixedly coupled together. For example, the top frame and the middle frame can be glued together.

Electronic devices provided on the middle frame may include many kinds of devices, such as battery, camera and physical press-keys. Here, examples of these devices will not be given one by one.

A comparison of a GPS antenna under the condition of a metal frame body according to the prior art with that under the condition of a metal frame body according to the present embodiment will be made below.

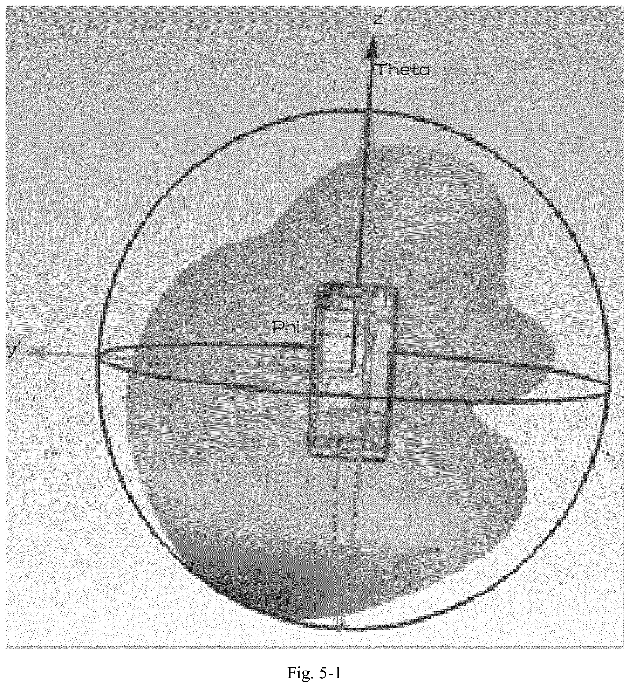

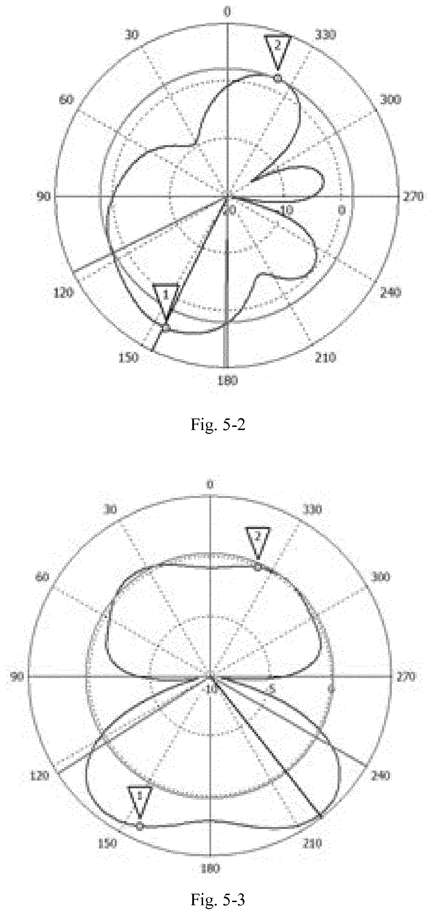

Fig. 5-1 is a graph showing a position of a terminal under the condition of a metal frame body according to the prior art. Fig. 5-2 is a graph showing a simulation result of circular polarization of the GPS antenna under the condition of a metal frame body according to the prior art. Fig. 5-3 is a graph showing a simulation result of circular polarization of the GPS antenna with a phase difference of 90 degree under the condition of a metal frame body according to the prior art.

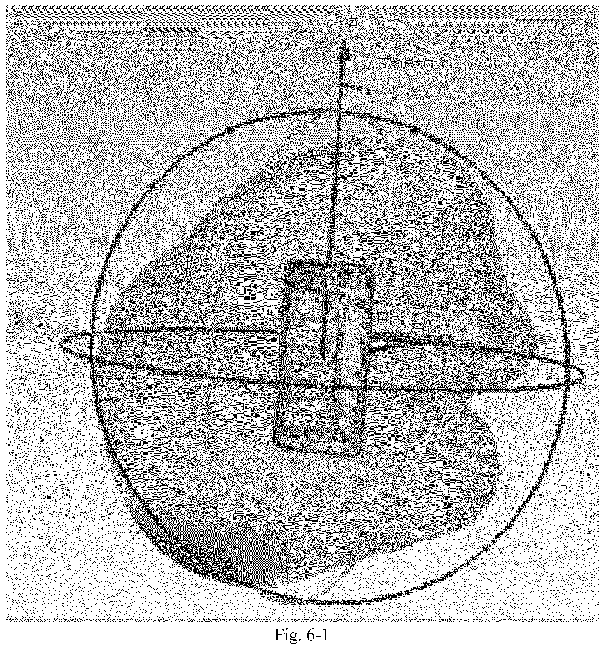

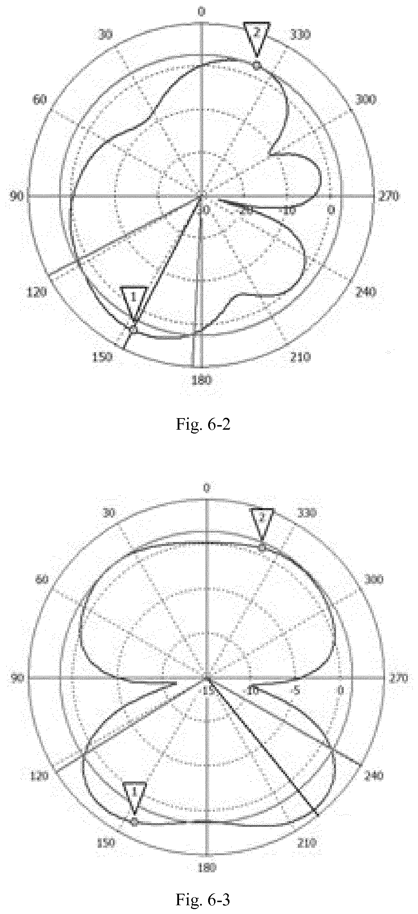

Fig. 6-1 is a graph showing a position of a terminal under the condition of a metal frame body according to the present embodiment. Fig. 6-2 is a graph showing a simulation result of circular polarization of the GPS antenna under the condition of a metal frame body according to the present embodiment. Fig. 6-3 is a graph showing a simulation result of circular polarization of the GPS antenna with a phase difference of 90 degree under the condition of a metal frame body according to the present embodiment.

**Table 1**

| The GPS antenna | Improvement in the total efficiency | The upper hemisphere efficiency | Delta | The upper hemisphere proportion |
|---|---|---|---|---|
| Comparison configuration shown in FIG. 5A | -5.2 | -9.9 | -4.7 | 34% |
| Configuration | -4.54 | -8.55 | -4.0 | 40% |
| shown in FIG. 6A | | | | |

As can be seen, in comparison with the prior art, the metal frame body according to the present embodiment improves the total efficiency of the GPS antenna by 0.7 dB, the upper hemisphere efficiency by 1.4 dB, and increases the upper hemisphere proportion by 0.7 dB (the upper hemisphere proportion is increased from 34% to 40%).

Fig. 5-3 shows a field pattern of the GPS antenna under the condition of a metal frame body according to the prior art, and Fig. 6-3 shows a field pattern of the GPS antenna under the condition of a metal frame body according to the present embodiment. The figures are plotted under the same condition where the frequency is 2.1 MHZ, the main lobe direction is of 154 degree, and the phase difference in each of two circular polarization graphs of Figs. 5-3 and 6-3 is 90 degree.

As can be seen, in comparison with that the ratio of the maximum value of front lobe to that of back lobe (F/B) is 3.3 according to the prior art, F/B is 2.5 under the condition of the metal frame body according to the present embodiment. Therefore, the upper hemisphere of the GPS antenna obviously becomes larger, and the F/B is improved by 0.8.

It is intended that the specification and embodiments be considered as examples only. Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A metal frame body, comprising:
a top frame (10) provided with a global positioning system, GPS, antenna; and
a middle frame (20) provided with a slot (201), wherein the top frame (10) and the middle frame (20) are electrically isolated from each other by a gap (30); wherein the position of the slot (201) corresponds with the position of the GPS antenna, wherein:
the slot (201) has a first point (202) on a first side of the middle frame (20);
the slot (201) is perpendicular to the first side; and
the first side is adjacent to the gap (30), and the first side is one side among four sides of the middle frame (20);
wherein a projection of the first point on the first side is coincident with a projection of the GPS antenna on the first side; and
wherein the slot (201) has a length of m times a wavelength of a GPS signal that the GPS antenna is configured to receive, m being a numerical value between 1/8 and 1/2.

2. The metal frame body of claim 1, wherein the metal frame body is made of one or more of: aluminum alloy, aluminum, and anodized aluminum.

3. A terminal, comprising:
a metal frame body according to any of claims 1 to 2.

4. A mobile terminal comprising:
a metal frame body according to any of claims 1-2.

5. The mobile terminal of claim 4, wherein the mobile terminal is one of a mobile phone, a tablet computer, or a portable positioning device.

6. The mobile terminal of claim 4, wherein the gap (30) comprises at least one of an air gap and an insulating medium.

7. The mobile terminal of claim 4, wherein the top frame (10) and the middle frame (20) are removably coupled together.

## Patentansprüche

1. Metallrahmenkörper, umfassend:
einen oberen Rahmen (10), der mit einer GPS-, Global Positioning System, Antenne versehen ist; und
einen mittleren Rahmen (20), der mit einem Schlitz (201) versehen ist, wobei der obere Rahmen (10) und der mittlere Rahmen (20) durch einen Spalt (30) elektrisch voneinander isoliert sind;
wobei die Position des Schlitzes (201) der Position der GPS-Antenne entspricht, wobei:
der Schlitz (201) einen ersten Punkt (202) auf einer ersten Seite des mittleren Rahmens (20) aufweist;
der Schlitz (201) senkrecht zur ersten Seite verläuft; und
die erste Seite an den Spalt (30) angrenzt, und die erste Seite eine Seite aus vier Seiten des mittleren Rahmens (20) ist;
wobei sich ein Vorsprung des ersten Punktes auf der ersten Seite mit einem Vorsprung der GPS-Antenne auf der ersten Seite deckt; und
wobei der Schlitz (201) die *m*-fache Länge einer Wellenlänge eines GPS-Signals aufweist, das die GPS-Antenne konfigurationsgemäß empfangen soll, wobei *m* ein Zahlenwert zwischen 1/8 und 1/2 ist.

2. Metallrahmenkörper nach Anspruch 1, wobei der Metallrahmenkörper aus einem oder mehreren besteht aus: Aluminiumlegierung, Aluminium, und anodisiertem Aluminium.

3. Endgerät, umfassend:
einen Metallrahmenkörper nach einem der Ansprüche 1 bis 2.

4. Mobiles Endgerät, umfassend:
einen Metallrahmenkörper nach einem der Ansprüche 1-2.

5. Mobiles Endgerät nach Anspruch 4, wobei es sich bei dem mobilen Endgerät um eines handelt aus einem Mobiltelefon, einem Tablet-Computer, oder einer tragbaren Positionsbestimmungsvorrichtung.

6. Mobiles Endgerät nach Anspruch 4, wobei der Spalt (30) mindestens eines aus einem Luftspalt und einem Isoliermedium umfasst.

7. Mobiles Endgerät nach Anspruch 4, wobei der obere Rahmen (10) und der mittlere Rahmen (20) lösbar miteinander gekoppelt sind.

## Revendications

1. Corps de châssis métallique, comprenant :
un châssis supérieur (10) pourvu d'une antenne de système de positionnement mondial, GPS ; et
un châssis intermédiaire (20) pourvu d'une fente (201), dans lequel le châssis supérieur (10) et le châssis intermédiaire (20) sont isolés électriquement l'un de l'autre par un espace (30) ;
dans lequel la position de la fente (201) correspond à la position de l'antenne GPS, dans lequel :
la fente (201) présente une première pointe (202) sur un premier côté du châssis intermédiaire (20) ;
la fente (201) est perpendiculaire au premier côté ; et
le premier côté est adjacent à l'espace (30), et le premier côté est un côté parmi quatre côtés du châssis intermédiaire (20) ;
dans lequel une saillie de la première pointe sur le premier côté coïncide avec une saillie de l'antenne GPS sur le premier côté ; et
dans lequel la fente (201) présente une longueur égale à m fois une longueur d'onde d'un signal GPS que l'antenne GPS est conçue pour recevoir, m étant une valeur numérique comprise entre 1/8 et 1/2.

2. Corps de châssis métallique selon la revendication 1, dans lequel le corps de châssis métallique est constitué d'un ou de plusieurs parmi : alliage d'aluminium, aluminium et aluminium anodisé.

3. Terminal, comprenant :
un corps de châssis métallique selon l'une quelconque des revendications 1 à 2.

4. Terminal mobile, comprenant :
un corps de châssis métallique selon l'une quelconque des revendications 1-2.

5. Terminal mobile selon la revendication 4, dans lequel le terminal mobile est l'un d'un téléphone mobile, d'une tablette numérique ou d'un dispositif de positionnement portable.

6. Terminal mobile selon la revendication 4, dans lequel l'espace (30) comprend au moins un d'un entrefer et d'un milieu isolant.

7. Terminal mobile selon la revendication 4, dans lequel le châssis supérieur (10) et le châssis intermédiaire (20) sont couplés l'un à l'autre de manière amovible.
